# EUROPÄISCHE PATENTSCHRIFT

(11) **EP 3 866 650 B1**
(45) Veröffentlichungstag und Bekanntmachung des Hinweises auf die Patenterteilung: **16.11.2022**
(21) Anmeldenummer: 19787268.2
(22) Anmeldetag: 17.10.2019
(51) Int. Cl.: A47J 31/36, A47J 31/46

(54) **GETRÄNKEZUBEREITUNGSMASCHINE**
MACHINE FOR MAKING BEVERAGES
MACHINE DE PRÉPARATION DE BOISSONS

(30) Priorität: 18.10.2018 EP 18201280
(43) Veröffentlichungstag der Anmeldung: 25.08.2021
(73) Patentinhaber: Tchibo GmbH, 22297 Hamburg (DE)
(72) Erfinder: DÜNKI, Christian, 9434 Au (CH); NAEFF, Patrik, 9425 Thal (CH)
(74) Vertreter: Frei Patent Attorneys
(86) Internationale Anmeldenummer: PCT/EP2019/078291
(87) Internationale Veröffentlichungsnummer: WO 2020/079191

(56) Entgegenhaltungen:
- EP-A1- 2 946 702

## Beschreibung

Die Erfindung betrifft Getränkezubereitungsmaschinen zum Zubereiten von Getränken oder dergleichen aus Portionspackungen, die durch ein in einer Portionsverpackung enthaltenes Extraktionsgut gebildet werden.

Extraktionsgeräte zum Zubereiten von Getränken oder dergleichen aus einem in einer Portionsverpackung vorhandenen Extraktionsgut, beispielsweise gemahlenem Kaffee oder Teeblättern, sind beispielsweise als Kaffee- oder Espressomaschinen bzw. Teezubereitungsmaschinen bekannt. Als Portionsverpackungen sind Kapseln, aber auch sogenannte "Pads" bekannt.

Es ist bereits bekannt, Portionspackungen mit einem Code zu versehen, welcher von einem dafür eingerichteten Erkennungsmodul der Kaffeemaschine ausgelesen wird, beispielsweise um die anschliessend an das Auslesen durchgeführte Brühung abhängig vom Typ der erkannten Portionspackung zu gestalten. Nebst dem Vorteil der möglichen typenabhängigen Brühparameterwahl bringt die Kapselerkennung (bzw. Erkennung von anderen Portionspackungen; 'Kapselerkennung' wird in diesem Text stellvertretend für die Erkennung geeigneter Portionspackungen verwendet) weitere Vorteile: Insbesondere für die Logistik und Convenience können Kapselerkennungsdaten verwendet werden. So kann beispielsweise aufgezeichnet werden, wie viele Kapseln auf einer Maschine gebraucht wurde, und es kann eine Nachlieferung von Kapseln veranlasst werden, wenn ein dokumentierter Kapselvorrat zur Neige geht. Weiter können Treueprogramme oder dergleichen eingerichtet werden, wonach ein Verbraucher nach einer gewissen Anzahl verbrauchter Kapseln weitere Kapseln vergünstigt erhält, etc.

Kapselerkennungsmodule haben jedoch den Nachteil, dass sie technisch aufwändig sind und daher die Extraktionsgeräte verteuern.

EP 2 946 702 zeigt eine Kaffeemaschine für Portionskapseln. Die Getränkezubereitungsmaschine weist einen Durchflussmesser auf um den Flüssigkeitsfluss in die Brühkammer zu messen, wobei die Steuerung die Pumpleistung in Abhängigkeit vom gemessenen Flüssigkeitsfluss steuert.

Es ist eine Aufgabe der vorliegenden Erfindung, ein Extraktionsgerät zur Verfügung zu stellen, welches mindestens einige der Vorteile einer maschinellen Kapselerkennung aufweist, welches aber weniger aufwändig und kostengünstiger in der Herstellung ist als ein Extraktionsgerät mit Kapselerkennungsmodul zum Auslesen eines beispielsweise optischen Codes auf der Portionspackung.

Diese Aufgabe wird gelöst durch die Erfindung wie sie in den Patentansprüchen definiert ist.

Getränkezubereitungsmaschinen der beanspruchten Art weisen eine Pumpe zum Fördern der Zubereitungsflüssigkeit - im Allgemeinen Wasser, ggf. mit einem Zusatz - in eine die Portionspackung aufnehmende Brühkammer sowie einen Durchflussmesser auf, der so an der via die Pumpe in die Brühkammer führenden Flüssigkeitsleitung angeordnet ist, dass er - direkt oder indirekt - ein Fördervolumen der in die Brühkammer geförderten Flüssigkeit messen kann.. Eine Maschinenelektronik steuert die Pumpe an und erfasst die Resultate dieser Messung um beispielsweise die Pumpe nach Erreichen eines vorgegebenen geförderten Gesamtfördervolumens auszuschalten. Gemäss einem Aspekt der Erfindung ist die Elektronik eingerichtet, die Messdaten des Durchflussmessers auszuwerten und aus dieser Auswertung eine Unterscheidung zwischen einem ersten Zustand "Brühen mit eingelegter Portionspackung" und einem zweiten Zustand "Wasserdurchfluss ohne eingelegte Portionspackung" zu treffen, um die Präsenz einer Portionspackung in der Brühkammer zu detektieren.

Als Durchflussmesser in Haushaltmaschinen werden oft Flügelrad-Durchflussmesser verwendet. Solche geben je Umdrehung eines Flügelrades einen Impuls an die Elektronik. Die Anzahl der Impulse ist charakteristisch für das Fördervolumen, und der Durchfluss (Volumen pro Zeiteinheit) ist dann durch die Steuerung, die auch einen Zeitgeber aufweist, durch Division ermittelbar. Die Verwendung eines solchen bekannten Durchflussmessers ist auch für die vorliegende Erfindung eine Option. Die Erfindung ist jedoch nicht auf diese Art der Durchflussmessung beschränkt. Vielmehr sind jegliche Messmethoden, welche eine Messung des geförderten Volumens oder direkt des Durchflusses ermöglichen, verwendbar.

Der Umstand, dass die Elektronik, also Maschinenelektronik, "eingerichtet" ist, ein Verfahren wie in diesem Text beschrieben durchzuführen heisst, dass an der Elektronik konkrete Massnahmen realisiert sind, damit dieses Verfahren durchgeführt wird, wenn entsprechende Bedingungen zutreffen, bspw. wenn ein Getränkezubereitungsprozess ausgelöst wurde. Es reicht also nicht aus, dass die Elektronik programmierbar wäre, um das Verfahren durchzuführen, sondern sie muss konkret programmiert sein oder auf andere Art (bspw. durch Verwendung eines ASIC, der die Funktionalität gleich beinhaltet) entsprechend eingerichtet/konfiguriert sein. In vielen Ausführungsformen wird das Einrichten der Elektronik über das Aufspielen einer entsprechenden Firmware geschehen.

Wenn im vorliegenden Text die Getränkezubereitungsmaschine anhand eines Verfahrens beschrieben wird, das sie durchführt, ist immer gemeint, dass die Maschine, insbesondere die Elektronik, dafür eingerichtet ist, das Verfahren durchzuführen.

Die Portionspackung kann eine Kapsel sein. Sie enthält eine Getränkezutat, beispielsweise ein Extraktionsgut wie Kaffeepulver oder Tee. Die Getränkezutat kann jedoch auch ein Extrakt oder beispielsweise Milchpulver sein oder beinhalten; auch weitere beispielsweise wasserlösliche Zutaten wie Zucker oder ein anderer Süssstoff können in der Portionspackung enthalten sein.

Die Elektronik weist beispielsweise einen Portionszähler auf, der nach einem Auslösen des Brühprozesses - bspw. durch Betätigung eines Auslöseknopfs - nur dann um "1" erhöht wird, wenn der erste Zustand (Portionspackung detektiert) festgestellt wurde.

Die Erfindung schlägt also vor, einen Zähler zum Zählen von Getränkezubereitungen oder generell eine Information über das Stattfinden einer Getränkezubereitung nicht allein an den Auslösevorgang zu knüpfen, sondern eben an die Resultate einer Auswertung. Durch diese an sich einfache Massnahme ist sichergestellt, dass die Information nicht dadurch verfälscht wird, dass der Benutzer auch eine scheinbare Getränkezubereitung auslösen kann, ohne dass er eine Portionspackung eingelegt hat, bspw. zum Vorwärmen eines Trinkgefässes oder aufgrund eines Irrtums. Trotzdem ist die Lösung kostengünstig, werden doch nur Elemente verwendet, die normalerweise ohnehin in einer Getränkezubereitungsmaschine vorhanden sind.

Die Auswertung nutzt den Umstand, dass der Durchflusswiderstand durch das Brühmodul, d.h. das Verhältnis zwischen der Druckdifferenz zwischen der Eingangsund der Ausgangsseite des Brühmoduls einerseits und dem Durchfluss (Fördervolumen pro Zeiteinheit) andererseits, davon abhängig ist, ob ein Portionspackung eingelegt ist oder nicht. Der Durchflusswiderstand wird grösser sein, wenn eine Portionspackung vorhanden ist und von der Flüssigkeit durchströmt werden muss. Der Durchflusswiderstand wird manchmal auch "Strömungswiderstand" genannt, obwohl seine Definition von derjenigen des Strömungswiderstands, den ein Objekt (bspw. ein Transportmittel) bei einer Bewegung durch ein Fluid antrifft, verschieden ist.

Beispielsweise kann bei im Wesentlichem konstantem Pumpdruck der Durchfluss der von der Pumpe geförderten Flüssigkeit - also das Resultat der ggf. ausgewerteten Messung durch den Durchflussmesser - ein direktes Mass dafür sein, ob eine Portionspackung eingelegt ist oder nicht. Dies weil der Durchflusswiderstand durch das Brühmodul eben davon abhängt, ob eine Portionspackung eingelegt ist oder nicht, und der Durchflusswiderstand durch alle anderen Abschnitte des Flüssigkeitswegs von einem Wassertank bis zu einem Ausgiesser konstant ist. Der Pumpdruck kann im Allgemeinen als im Wesentlichen konstant angenommen werden; und auch wenn er bspw. bei einem grösseren Durchfluss leicht nachgeben sollte, ändert das nichts daran, dass der Durchfluss ein Mass für die An- oder Abwesenheit einer Portionspackung ist.

Es ist im Übrigen auch möglich, den Pumpdruck oder die Pumpleistung charakterisierende Messdaten, wie bspw. den Stromverbrauch der Pumpe, in die Auswertung mit einzubeziehen.

Bei der Auswertung wird auf geeignete Art genutzt, dass das Durchflussverhalten ein anderes ist, wenn eine Portionspackung eingelegt ist als wenn das nicht der Fall ist. Das kann bspw. geschehen, indem zu einem bestimmten Zeitpunkt oder nach Erreichen eines bestimmten Fördervolumens nach Einschalten der Pumpe der Durchflusswert mit einem Schwellwert verglichen wird. Liegt der Durchfluss über dem Schwellwert oder ist er gleich dem Schwellwert, ist keine Portionspackung eingelegt. Auch Varianten, bei denen der Durchfluss über einen bestimmten Zeitraum oder während der Förderung eines bestimmten Volumens (bspw. nach Förderung der ersten x ml bis die nächsten y ml gefördert sind) erfasst und ausgewertet wird, sind denkbar. Beispielsweise kann die Zeit, die es braucht um nach Förderung der ersten x ml weitere y ml zu fördern, und mit einem Schwellwert verglichen werden, oder es kann die Differenz zwischen dem Durchfluss nach Förderung der ersten x ml und nach Förderung der weiteren y ml gebildet und mit einem Schwellwert verglichen werden. Typische Werte für x [ml] liegen bei einem solchen Vorgehen zwischen 3 und 7, beispielsweise ca. 5, und typische Werte für y [ml] sind zwischen 5 und 25, insbesondere beispielsweise zwischen 8 und 18, beispielsweise ca. 12.

Es ist auch möglich, dass geprüft wird, ob der Durchfluss in Funktion der Zeit oder des geförderten Volumens einen charakteristischen Verlauf aufweist, d.h. anstatt des Vergleichs von Absolutwerten ist auch ein Vergleich von Mustern in der Entwicklung des Durchflusses möglich. Dies kann beispielsweise beinhalten, dass die zeitliche Ableitung oder die Ableitung nach dem Fördervolumen erfasst und mit einem festen Wert oder einer Vergleichs-Funktion abhängig von der Zeit oder dem Volumen verglichen wird. Weitere Verfahren zum Erfassen von charakteristischen Mustern und/oder charakteristischen Verläufen bis hin zu Methoden der künstlichen Intelligenz sind denkbar und nicht ausgeschlossen. Beispielsweise sind Verfahren bekannt, gemäss welcher eine Datenverarbeitungseinheit mit einer Vielzahl von Messungen gefüttert wird, zusammen mit der Angabe, ob eine solche Messung einer Messung mit oder ohne Portionspackung entspricht. Daraus ermittelt dann die Elektronik ein Unterscheidungskriterium, welches den Daten Rechnung trägt. Es sind bereits sowohl Algorithmen als auch Verfahren des maschinellen Lernens bekannt, welche solches durchführen.

Als Resultat des erfindungsgemässen Vorgehens ergibt sich die Information, ob während des Prozesses eine Portionspackung eingelegt ist oder nicht. Das kann insbesondere für eine Zählung von Getränkezubereitungen (insbesondere Brühungen) verwendet werden. Aber auch für die Maschinensteuerung kann die Information von Nutzen sein. Beispielsweise können bei einer an die Förderung der Flüssigkeit anschliessenden Unregelmässigkeit (Blockierung oder dergleichen) die von der Maschinensteuerung angewandten Massnahmen davon abhängen, ob während der vorhergehenden Flüssigkeitsförderung eine Portionspackung in der Brühkammer war oder nicht.

Insbesondere kann die Elektronik der Getränkezubereitungsmaschine ein Kommunikationsmodul aufweisen. Über dieses können die Resultate der erfindungsgemässen Detektion einer Portionspackung an ein externes Gerät und/oder an ein Netzwerk übermittelt werden. Namentlich die Resultate einer Zählung von Getränkezubereitungen kann verwendet werden.

Gemäss einer ersten diesbezüglichen Möglichkeit kann beispielsweise eine Bestandesführung erfolgen. Dies kann durch die Getränkezubereitungsmaschine, gegebenenfalls das externe Gerät (bspw. ein Mobiltelefon, insbesondere Smartphone) und/oder gegebenenfalls einen über das Netzwerk mit der Maschine in Verbindung stehenden Dienst, beispielsweise einen Server des Anbieters der Portionspackungen, erfolgen. Zu diesem Zweck weist die Maschine bzw. das Gerät bzw. der Dienst eine Bestandesinformation auf, welche vom Benutzer aktiv zur Verfügung gestellt wird und/oder auf elektronisch vorgenommenen Bestellungen oder dergleichen beruht. Die Zählung von Getränkezubereitungen kann dazu verwendet werden, um den Bestand laufend zu aktualisieren und beispielsweise bei Bedarf geeignete Massnahmen einzuleiten, wie die automatische Nachlieferung von Portionspackungen oder die Information an den Benutzer, dass der Bestand zur Neige geht, etc.

Gemäss einer weiteren Möglichkeit kann die Zählung mit Übermittlung an einen Dienst oder ein externes Gerät auch für Promotions- und/oder Kundenbindungszwecke genutzt werde, beispielsweise für Treueprogramme etc.

Entsprechend umfasst die vorliegende Erfindung nebst einer Getränkezubereitungsmaschine auch ein System, das ausser der Maschine eine Software enthält, welche extern, beispielsweise auf einem Mobiltelefon und/oder einem Computer, bspw. Server eines Anbieters von Portionspackungen, installierbar ist und eine Buchführung über die Anzahl der effektiv auf der Maschine durchgeführten Getränkezubereitungen ermöglicht.

Eine Zählung der durchgeführten Getränkezubereitungen kann auch in der Maschine selbst von Nutzen sein, beispielsweise für Wartungszwecke, Informationen über durzuführende Reinigungs- oder Entkalkungszyklen, etc.

Nebst der Getränkezubereitungsmaschine ist auch ein Verfahren zum Betreiben einer Getränkezubereitungsmaschine Gegenstand der vorliegenden Erfindung.

Das in dem unabhängigen Verfahrensanspruch spezifizierte Verfahren kann mit den in den auf den unabhängigen Vorrichtungsanspruch rückbezogenen abhängigen Vorrichtungsansprüchen beschriebenen Merkmalen bzw. entsprechenden Verfahrensmerkmalen weitergebildet werden.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: ein Schema einer Getränkezubereitungsmaschine, insbesondere einer Kaffeemaschine;
- Fig. 2: ein Fördervolumen-Zeit-Diagramm;
- Fig. 3: ein Durchfluss-Zeit-Diagramm; und
- Fig. 4: ein Durchfluss-Fördervolumen-Diagramm.

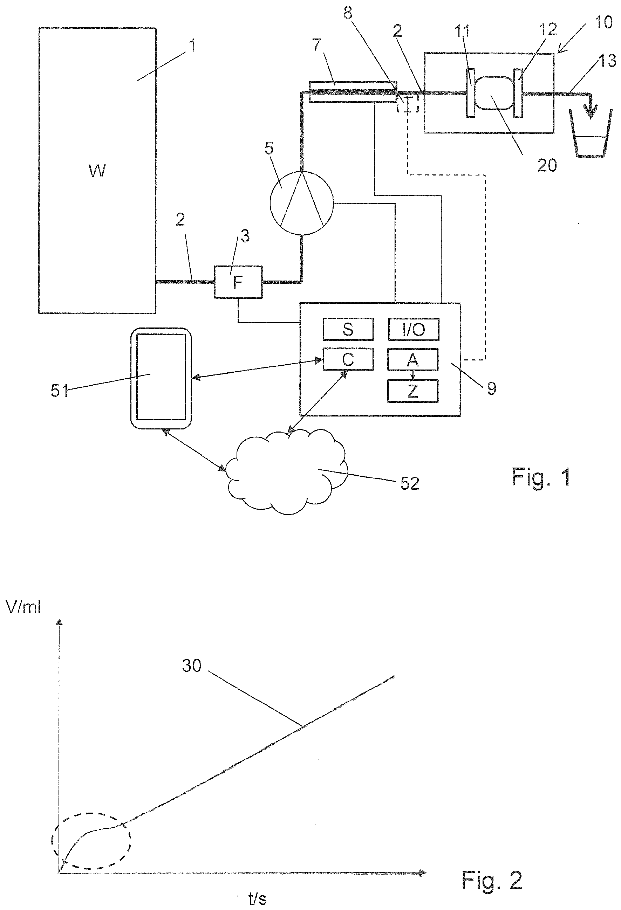

**Figur 1** zeigt ein Schema einer Getränkezubereitungsmaschine, insbesondere einer Kaffeemaschine. Die Wasserzuführung weist einen Wassertank 1 und eine Flüssigkeitsleitung, nämlich eine Zuführleitung 2 vom Wassertank zu einem Brühmodul 10 auf. Das Wasser wird durch eine Pumpe 5 gefördert und durchfliesst einen Wassererhitzer - hier als Durchlauferhitzer 7 gezeichnet - bevor es ins Brühmodul einströmt. Vor der Pumpe ist ein Durchflussmesser 3 (,Flowmeter') angeordnet, welcher den Durchfluss des Wassers durch die Zuführleitung und, weil sich die Zuführleitung 2 nach dem Durchflussmesser nicht verzweigt, damit auch den Flüssigkeitsfluss in das Brühmodul 10 misst. Bei einem Durchflussmesser der Art "Verdrängungszähler; *positive displacement flow-meter",* wie bspw. einem Flügelrad-Durchflussmesser, geschieht eine solche Messung, indem Volumeneinheiten gezählt werden und - bspw. in der Maschinenelektronik, s.u., oder in einer eigenen Elektronik - durch Division der Volumeneinheiten durch eine Zeiteinheit ein Durchfluss ermittelt wird.

Die Anordnung des Durchflussmessers vor der Pumpe hat den Vorteil, dass der Durchflussmesser nicht im Bereich angeordnet ist, der unter Druck steht und auch nicht im Heissbereich. Bei geeigneter Auslegung des Durchflussmessers ist jedoch auch eine Anordnung in Durchflussrichtung nach der Pumpe oder gar nach dem Wassererhitzer oder im Wassererhitzer nicht a priori ausgeschlossen. Auch die Integration des Durchflussmessers in die Pumpe ist eine Option. Auf jeden Fall sollte er so angeordnet sein, dass der von ihm (direkt oder, bspw. beim erwähnten Flügelrad-Durchflussmesser indirekt via Auswertung durch die Elektronik) gemessene Durchfluss ermöglicht, den Flüssigkeitsfluss in die beim geschlossenen Brühmodul gebildete, gegebenenfalls die eingelegte Kapsel 20 beinhaltende, Brühkammer hinein zu ermitteln. Als Durchfluss (am Ort des Durchflussmessers) oder Flüssigkeitsfluss (in die Brühkammer hinein) wird die pro Zeiteinheit fliessende Flüssigkeitsmenge bezeichnet, bspw. als Volumen oder Masse pro Zeiteinheit dargestellt.

Das Brühmodul weist, wie an sich bekannt, einen Injektor 11 zum Einleiten von Wasser in eine Portionskapsel 20 sowie eine Ausleitvorrichtung 12 (oder Extraktionsvorrichtung) zum Ausleiten der Flüssigkeit aus der Kapsel 20 in einen Ausgiesser 13 auf.

Die Maschine besitzt eine Elektronik 9, welche nebst einer Steuerung S für die Maschine und einem optionalen Kommunikationsmodul C und einer Eingabe- oder optional Ein-/Ausgabeeinheit I/O auch eine Auswerteeinheit A bildet. Diese einzelnen Funktionen können in separaten, mindestens teilweise miteinander in Kommunikationsverbindung stehenden Modulen oder in einer gemeinsamen Datenverarbeitungs- und Ein-/Ausgabeeinheit integriert vorhanden sein. Die Elemente wie Ein-/Ausgabeeinheit, die beispielsweise Knöpfe oder dergleichen und/oder einen berührungsempfindlichen Bildschirm aufweisen kann, werden hier nicht näher erläutert, da sie für Getränkezubereitungsmaschinen bekannt und nicht Gegenstand der vorliegenden Erfindung sind.

Die Elektronik 9 steuert die Pumpe 5 und eventuell auch den Wassererhitzer an. Die vom Durchflussmesser 3 gemessenen Durchflusswerte sowie gegebenenfalls die von einem optionalen Temperatursensor 8 ermittelten Temperaturwerte dienen der Steuerung als Eingangsgrössen.

Ein solcher Temperatursensor 8 kann wie gezeichnet in Kontakt mit der Zuführleitung 2 anschliessend an den Wassererhitzer, im Wassererhitzer selbst oder am Wassererhitzer angeordnet sein. Die Steuerung kann so eingerichtet sein, dass sie einen Regelkreis für die Temperatur bildet, indem der Wassererhitzer so angesteuert wird, dass die vom Temperatursensor 8 gemessene Temperatur sich stets in einem gewissen Fenster bewegt. Auch das Hinzuziehen anderer Messwerte, namentlich des gemessenen Durchflusses, für die Temperaturregelung ist möglich.

Weitere Eingangsgrössen können der Elektronik 9 zugeleitet werden und die Steuerung beeinflussen, darunter vom Benutzer eingegebene Parameter und/oder Programmierungen.

Das Fördervolumen V in Funktion der Zeit ist in **Figur 2** beispielhaft aufgetragen (Bezugszeichen 30). Insbesondere am Anfang des Prozesses, in Figur 2 im gestrichelt eingekreisten Bereich, ergibt sich ein charakteristischer Verlauf, welcher für die nachstehend beschriebene Auswertung verwendet wird.

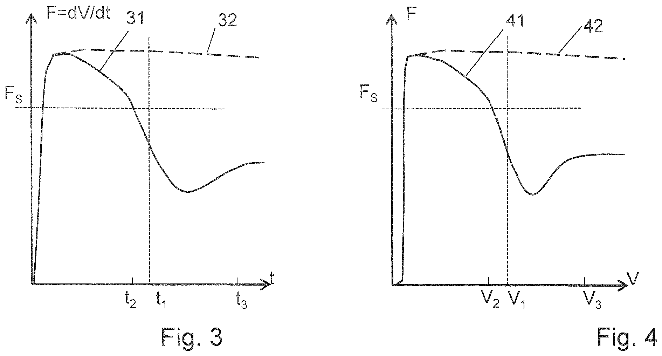

Für die Auswertung wird das Resultat der Durchflussmessung verwendet. Wie in **Figur 3** schematisch gezeichnet, wird der Durchfluss 31 dV/dt, d.h. das Fördervolumen V pro Zeiteinheit, bei konstanter Pumpleistung in Funktion der Zeit t kurz nach dem Einschalten der Pumpe zurückgehen, da sich die Kapsel (oder andere Portionspackung) mit Flüssigkeit füllt und einen Durchflusswiderstand bildet. Der genaue Verlauf und das Ausmass des Durchflussrückganges können von der Kapsel, insbesondere dem Inhalt (Mahlgrad, Füllmenge etc.) sowie dem Kapselmaterial, der Beschaffenheit der Kapsel, und der Beschaffenheit des die Kapsel aufnehmenden Brühmoduls abhängen; ein deutlicher Rückgang wird aber immer festzustellen sein.

Wenn keine Kapsel eingelegt ist, bleibt der Durchfluss hingegen ungefähr konstant (Kurve 32) oder fällt in Funktion der Zeit erst später und weniger prononciert ab, weil eben kein Durchflusswiderstand aufgrund von in der Portionspackung vorhandenem Extraktionsgut (oder eventuell Extrakt) erzeugt wird.

Dies kann für die Auswertung genutzt werden. Eine Möglichkeit ist, dass nach einer beispielsweise empirisch bestimmten Zeit t₁ überprüft wird, ob der Durchfluss über oder unter einem beispielsweise ebenfalls empirisch bestimmten Schwellwert F_{S} ist: wenn der Durchfluss unter dem Schwellwert ist, ist eine Kapsel vorhanden.

Wie in allen in diesem Text beschriebenen Ausführungsformen wird bei festgestellter Anwesenheit einer Kapsel (oder anderen Portionspackung) während des Prozesses der in einem Zähler Z (Fig. 1) erfasste Zählwert um eins erhöht. Wenn nicht, wird keine Kapsel gezählt.

Dieses Verfahren kann je nach Bedarf noch robuster gemacht werden, indem anstelle des Durchflusses zu einem bestimmten Zeitpunkt t₁ ein über einen Zeitraum [t₂, t₃] integrierter Durchfluss - d.h. das zwischen zwei Zeitpunkten t₂ und t₃ geförderte Fördervolumen - oder äquivalent ein Durchschnittswert, beispielsweise das arithmetische Mittel, aus mehreren Durchflussmessungen als Vergleichsgrösse verwendet wird. Wenn diese Vergleichsgrösse über einem gewissen Schwellwert liegt, ist keine Kapsel eingelegt. Eine andere Möglichkeit ist, dass eine Durchflussdifferenz, d.h. ein Durchflussabfall zwischen zwei Zeitpunkten, oder eine zeitliche Ableitung des Durchflusses ausgewertet wird. Auch Kombinationen sind möglich.

In manchen Getränkezubereitungsmaschinen besteht eine gewisse zeitliche Unschärfe, die von Toleranzen in den Kapseleigenschaften herrühren mag und die dazu führt, dass während der Kapselöffnungsphase (die Kapsel wird beispielsweise angestochen, um das Wasser einzuleiten) der genaue Zeitpunkt, zu dem sich die Kapsel mit Flüssigkeit zu füllen beginnt, nicht bekannt ist.

Für solche Situationen wird als Alternative zur Auswertung in Funktion der Zeit vorgeschlagen, die den Durchfluss in Funktion des bereits geförderten Volumens V (Fördervolumens) auszuwerten, was in **Figur 4** skizziert ist. Auch in Funktion des geförderten Volumens geht der Durchfluss 41 nach Erreichen eines gewissen Werts markant zurück, wenn eine Kapsel eingelegt ist. Ohne eingelegte Kapsel (Kurve 42) ist das nicht der Fall.

Auch in bei dieser Alternative besteht erstens die Möglichkeit, den nach Förderung eines gewissen Volumens V₁ gemessenen Durchfluss mit einem Schwellwert Fs zu vergleichen: Wenn der Durchfluss kleiner ist als der Schwellwert, ist eine Kapsel eingelegt, sonst nicht. Je nach Portionspackung - die als Kaffeekapsel im Allgemeinen eine Füllmenge zwischen 6g und 10 g haben wird - kann das Volumen V₁, bei dem eine besonders gute Unterscheidung getroffen wird, bei einem festen Wert zwischen ca. 12 ml und ca. 25 ml sein, insbesondere bei einem Wert zwischen 15 ml und 20 ml.

Die vorstehend zur Auswertung in Funktion der Zeit beschriebenen Varianten existieren auch für die Auswertung in Funktion des Volumens. Beispielsweise kann ausgewertet werden, wieviel Zeit zwischen dem Zeitpunkt, zu dem ein bestimmtes Volumen V₂ erreicht wurde und dem Zeitpunkt, zu dem ein anderes bestimmtes Volumen V₃ erreicht wurde, oder es kann eine Durchflussratendifferenz oder eine zeitliche Ableitung oder eine Ableitung ∂F/∂V des Durchflusses nach dem Fördervolumen verglichen werden.

Besonders vorteilhaft ist das Vorgehen gemäss der vorliegenden Erfindung im Zusammenhang mit einer Möglichkeit für die Getränkezubereitungsmaschine, Daten mit einem anderen Gerät und/oder einem Netzwerk auszutauschen, d.h. mit einem Kommunikationsmodul der Elektronik, was auch aus nachstehenden Ausführungen klar wird.

Die Resultate der auf der Auswertung beruhenden Zählung können beispielsweise wie folgt verwendet werden:
Erstens kann die Getränkezubereitungsmaschine die Zählung der vorgenommenen Getränkezubereitungen für Wartungszwecke verwenden. Dafür kann beispielsweise vorgesehen sein, dass der Benutzer nach einer bestimmten Anzahl gezählter Getränkezubereitungen dazu aufgefordert wird, eine Reinigung und/oder eine Entkalkung vorzunehmen oder ähnlich. Die Anzahl der Getränkezubereitungen kann auch auslesbar sein und einer Servicetechnikerin Hinweise darauf geben, dass ein bestimmtes Teil auszuwechseln ist etc.

Zweitens kann die Zählung der Getränkezubereitungen für eine Überwachung des Bestandes von Portionspackungen verwendet werden. Dazu werden gemäss einer ersten Option Daten über einen Bestand in die Getränkezubereitungsmaschine eingelesen, zum Beispiel nach einem Kauf. Das kann automatisch geschehen, wenn der Kauf mit elektronischen Hilfsmitteln, beispielsweise als online-Bestellung vorgenommen wurde. Das Resultat der Zählung erlaubt dann eine Überwachung des Bestands, und die Getränkezubereitungsmaschine kann bspw. den Benutzer informieren, wenn der Bestand zur Neige zu gehen droht und/oder kann gleich eine Bestellmöglichkeit anbieten. Zu diesem Zweck kann bspw. ein dedizierter Taster an der Maschine vorgesehen sein, welcher eine Bestellung eines vorgegebenen Korbs an Portionspackungen auslöst, oder eine solche Bestellung kann über eine Menüeingabe erfolgen.

Gemäss einer zweiten Option erfolgt eine solche Bestandesführung ausserhalb der Getränkezubereitungsmaschine, bspw. in einem externen Gerät 51 (insbesondere Mobiltelefon) und/oder über ein Netzwerk 52, auf einem Server oder in der Cloud. Zu diesem Zweck kann die Getränkezubereitungsmaschine bei jeder Getränkezubereitung, in regelmässigen Intervallen, oder bei bestimmten Ereignissen die Anzahl durchgeführter Getränkezubereitungen an das externe Gerät bzw. das Netzwerk übermitteln. Je nach vom Benutzer vorgenommenen Einstellungen kann dann eine Nachbestellung automatisch ausgelöst werden, oder der Benutzer kann auf geeignetem Weg - optional auch über die Getränkezubereitungsmaschine - auf den niedrigen Bestand und eine Bestellmöglichkeit aufmerksam gemacht werden.

Drittens kann die Zählung auch für Promotions- und/oder Kundenbindungszwecke genutzt werden. Bspw. kann die Maschine jeweils die Information direkt und/oder über ein externes Gerät 51 an ein Netzwerk 52 übermitteln, wonach wieder eine bestimmte Anzahl Getränkezubereitungen vorgenommen wurde. Das kann dann auslösen, dass dem Benutzer ein Treuegeschenk, ein Angebot oder dergleichen zugestellt wird, je nach vorgenommenen Einstellungen direkt, abhängig von weiteren Ereignissen, etc..

## Patentansprüche

1. Getränkezubereitungsmaschine, aufweisend ein Brühmodul (10) zum Bilden einer Brühkammer, welche zum Aufnehmen einer Portionspackung (20) mit einer Getränkesubstanz ausgebildet ist, eine Pumpe (5) zum Fördern einer Zubereitungsflüssigkeit durch eine Flüssigkeitsleitung (2) in die Brühkammer, einen an der Flüssigkeitsleitung (2) angeordneten Durchflussmesser (3), sowie eine Maschinenelektronik (9) zum Ansteuern der Pumpe (5) und zum Erfassen von Messdaten des Durchflussmessers (3), **dadurch gekennzeichnet, dass** die Maschinenelektronik (9) eingerichtet ist, die Messdaten des Durchflussmessers (3) auszuwerten und aus dieser Auswertung eine Unterscheidung zwischen einem ersten Zustand, der einem Zustand mit in die Brühkammer eingelegter Portionspackung entspricht, und einem zweiten Zustand, der einem Zustand ohne in die Brühkammer eingelegter Portionspackung entspricht, zu treffen um eine Präsenz oder Absenz einer Portionspackung in der Brühkammer zu detektieren.

2. Getränkezubereitungsmaschine nach Anspruch 1, wobei die Maschinenelektronik (9) einen Zähler von Getränkezubereitungen aufweist, der nach einem Auslösen eines Getränkezubereitungsprozesses nur dann um einen Wert erhöht wird, wenn der erste Zustand festgestellt wurde.

3. Getränkezubereitungsmaschine nach Anspruch 1 oder 2, wobei die Maschinenelektronik (9) eingerichtet ist, den gemessenen Durchfluss mit einem Schwellwert zu vergleichen, und auf den ersten Zustand zu schliessen, wenn der Durchfluss unter dem Schwellwert liegt und auf den zweiten Zustand zu schliessen, wenn der Durchfluss über dem Schwellwert liegt oder dem Schwellwert entspricht.

4. Getränkezubereitungsmaschine nach Anspruch 3, wobei der in einem vorgegebenen zeitlichen Abstand zu einer Auslösung eines Getränkezubereitungsprozesses gemessene Durchfluss mit dem Schwellwert verglichen wird.

5. Getränkezubereitungsmaschine nach Anspruch 3, wobei der Durchfluss mit dem Schwellwert verglichen wird, der nach Erreichen eines vorgegebenen Fördervolumens gemessen wurde.

6. Getränkezubereitungsmaschine nach einem der Ansprüche 3-5, wobei für das Vergleichen mit dem Schwellwert ein über ein Zeitintervall integrierter Durchfluss verwendet wird.

7. Getränkezubereitungsmaschine nach einem der vorangehenden Ansprüche, wobei die Elektronik ein Kommunikationsmodul aufweist, um mit einem Netzwerk (52) und/oder direkt mit einem externen Gerät (51) Daten auszutauschen.

8. Getränkezubereitungsmaschine nach Anspruch 7, wobei die Maschinenelektronik (9) eingerichtet ist, ein Resultat der Auswertung an das externe Gerät bzw. einen über das Netzwerk erreichbaren Dienst zu übermitteln.

9. System, aufweisend eine Getränkezubereitungsmaschine nach einem der Ansprüche 7 oder 8 sowie eine Software, welche auf einem direkt mit der Getränkezubereitungsmaschine in Kommunikationsverbindung bringbaren externen Gerät (51) oder auf einem über das Netzwerk (52) mit der Getränkezubereitungsmaschine in Kommunikationsverbindung bringbaren externen Computer installierbar ist und dieses Gerät bzw. diesen Computer dazu befähigt, Daten über die Anzahl von durch die Getränkezubereitungsmaschine durchgeführten Getränkezubereitungen zu führen.

10. Verfahren zum Betreiben einer Getränkezubereitungsmaschine, insbesondere nach einem der Ansprüche 1 bis 8, zum Zubereiten eines Getränks aus einer in einer Portionspackung (20) enthaltenen Getränkesubstanz, mit einem Brühmodul (10) zum Bilden einer Brühkammer für die Portionspackung, wobei der Brühkammer durch eine Pumpe (5) Wasser zugeführt und der Fluss des zugeführten Wassers gemessen wird **dadurch gekennzeichnet, dass** der gemessene Durchfluss ausgewertet und aus dieser Auswertung eine Unterscheidung zwischen einem ersten Zustand, der einem Zustand mit in die Brühkammer eingelegter Portionspackung entspricht, und einem zweiten Zustand, der einem Zustand ohne in die Brühkammer eingelegter Portionspackung entspricht, getroffen wird, um eine Präsenz oder Absenz einer Portionspackung in der Brühkammer zu detektieren.

## Claims

1. Beverage preparation machine, having a brewing module (10) for forming a brewing chamber which is designed to receive a portion package (20) with a beverage substance, a pump (5) for conveying a preparation liquid through a liquid line (2) into the brewing chamber, a flow meter (3) arranged on the liquid line (2), and machine electronics (9) for controlling the pump (5) and for recording measurement data of the flow meter (3), **characterised in that** the machine electronics (9) are set up to evaluate the measurement data of the flow meter (3) and to make a distinction from this evaluation between a first state, which corresponds to a state with a portion package inserted into the brewing chamber, and a second state, which corresponds to a state without a portion package inserted into the brewing chamber, in order to detect the presence or absence of a portion package in the brewing chamber.

2. Beverage preparation machine according to claim 1, wherein the machine electronics (9) comprise a counter of beverage preparations which is increased by one value after a beverage preparation process has been triggered only when the first condition has been detected.

3. Beverage preparation machine according to claim 1 or 2, wherein the machine electronics (9) is arranged to compare the measured flow rate with a threshold value and to conclude the first state if the flow rate is below the threshold value and to conclude the second state if the flow rate is above the threshold value or corresponds to the threshold value.

4. Beverage preparation machine according to claim 3, wherein the flow rate measured at a predetermined time interval to triggering of a beverage preparation process is compared with the threshold value.

5. Beverage preparation machine according to claim 3, wherein the flow rate is compared with the threshold value measured after a predetermined delivery volume has been reached.

6. Beverage preparation machine according to any one of claims 3-5, wherein a flow rate integrated over a time interval is used for the comparison with the threshold value.

7. Beverage preparation machine according to any one of the preceding claims, wherein the electronics comprise a communication module for exchanging data with a network (52) and/or directly with an external device (51).

8. Beverage preparation machine according to claim 7, wherein the machine electronics (9) is arranged to transmit a result of the evaluation to the external device or a service accessible via the network.

9. A system comprising a beverage preparation machine according to any one of claims 7 or 8 and software installable on an external device (51) directly communicable with the beverage preparation machine or on an external computer communicable via the network (52) with the beverage preparation machine and enabling said device or computer to maintain data on the number of beverage preparations performed by the beverage preparation machine.

10. Method for operating a beverage preparation machine, in particular according to one of claims 1 to 8, for preparing a beverage from a beverage substance contained in a portion package (20), with a brewing module (10) for forming a brewing chamber for the portion package, wherein water is supplied to the brewing chamber by a pump (5) and the flow rate of the supplied water is measured, **characterised in that** the measured flow is evaluated and a distinction is made from this evaluation between a first state corresponding to a state with a portion package inserted in the brewing chamber and a second state corresponding to a state without a portion package inserted in the brewing chamber, in order to detect a presence or absence of a portion package in the brewing chamber.

## Revendications

1. Machine de préparation de boissons, présentant un module d'infusion (10) pour former une chambre d'infusion, qui est conçue pour recevoir un emballage de portion (20) avec une substance de boisson, une pompe (5) pour transporter un liquide de préparation à travers une conduite de liquide (2) dans la chambre d'infusion, un débitmètre (3) disposé sur la conduite de liquide (2), ainsi qu'une électronique de machine (9) pour commander la pompe (5) et pour saisir des données de mesure du débitmètre (3), **caractérisé en ce que** l'électronique de machine (9) est agencée pour évaluer les données de mesure du débitmètre (3) et pour faire, à partir de cette évaluation, une distinction entre un premier état, qui correspond à un état avec un emballage de portions inséré dans la chambre d'infusion, et un deuxième état, qui correspond à un état sans emballage de portions inséré dans la chambre d'infusion, afin de détecter une présence ou une absence d'un emballage de portions dans la chambre d'infusion.

2. Machine de préparation de boissons selon la revendication 1, dans laquelle le système électronique (9) de la machine comporte un compteur de préparations de boissons qui est incrémenté d'une valeur après le déclenchement d'un processus de préparation de boissons uniquement lorsque le premier état a été détecté.

3. Machine de préparation de boissons selon la revendication 1 ou 2, dans laquelle l'électronique de machine (9) est agencée pour comparer le débit mesuré à une valeur de seuil et pour conclure au premier état si le débit est inférieur à la valeur de seuil et pour conclure au deuxième état si le débit est supérieur à la valeur de seuil ou correspond à la valeur de seuil.

4. Machine de préparation de boissons selon la revendication 3, dans laquelle le débit mesuré à un intervalle de temps prédéterminé par rapport au déclenchement d'un processus de préparation de boissons est comparé à la valeur seuil.

5. Machine de préparation de boissons selon la revendication 3, dans laquelle le débit est comparé à la valeur seuil mesurée après avoir atteint un volume de transport prédéterminé.

6. Machine de préparation de boissons selon l'une quelconque des revendications 3 à 5, dans laquelle un débit intégré sur un intervalle de temps est utilisé pour la comparaison avec la valeur seuil.

7. Machine de préparation de boissons selon l'une des revendications précédentes, dans laquelle l'électronique comprend un module de communication pour échanger des données avec un réseau (52) et/ou directement avec un appareil externe (51).

8. Machine de préparation de boissons selon la revendication 7, dans laquelle l'électronique de la machine (9) est agencée pour transmettre un résultat de l'évaluation à l'appareil externe ou à un service accessible par le réseau.

9. Système comprenant une machine de préparation de boissons selon l'une des revendications 7 ou 8 ainsi qu'un logiciel qui peut être installé sur un appareil externe (51) pouvant être mis en liaison de communication directement avec la machine de préparation de boissons ou sur un ordinateur externe pouvant être mis en liaison de communication avec la machine de préparation de boissons via le réseau (52) et qui permet à cet appareil ou à cet ordinateur de tenir à jour des données sur le nombre de préparations de boissons effectuées par la machine de préparation de boissons.

10. Procédé d'exploitation d'une machine de préparation de boissons, en particulier selon l'une des revendications 1 à 8, pour la préparation d'une boisson à partir d'une substance de boisson contenue dans un emballage de portions (20), avec un module d'infusion (10) pour former une chambre d'infusion pour l'emballage de portions, de l'eau étant amenée à la chambre d'infusion par une pompe (5) et le flux de l'eau amenée étant mesuré, **caractérisé en ce que** le module d'infusion (10) est conçu de manière à ce que l'eau soit amenée à la chambre d'infusion par une pompe (5), **en ce que** l'on évalue le débit mesuré et, à partir de cette évaluation, on fait une distinction entre un premier état, qui correspond à un état avec un emballage de portions inséré dans la chambre d'infusion, et un deuxième état, qui correspond à un état sans emballage de portions inséré dans la chambre d'infusion, afin de détecter une présence ou une absence d'un emballage de portions dans la chambre d'infusion.
